# EUROPEAN PATENT APPLICATION

(11) **EP 1 670 119 A1**
(43) Date of publication of application: **14.06.2006**
(21) Application number: 05102429.7
(22) Date of filing: 24.03.2005
(51) Int. Cl.: H02K 1/27, H02K 29/03

(54) **Motor with Improved flux distribution**

(30) Priority: 08.12.2004 KR 2004103118
(71) Applicant: SAMSUNG ELECTRONICS CO., LTD., Suwon-si, Gyeonggi-Do 442-742 (KR)
(72) Inventor: KIM, Gyeong Don, Seoul (KR)
(74) Representative: Geary, Stuart Lloyd

(57) **Abstract**

A permanent magnet electric motor, in which permanent magnets are disposed on a rotor core, such as a brushless DC motor, and air-shaped slits are formed in the rotor core so as to maximally reduce reluctance torque, thereby decreasing an amount of riffle of motor torque and reducing noise. The permanent magnet electric motor, in which the permanent magnets are disposed in the rotor core, wherein the arc-shaped slits are disposed along a route of a magnetic flux at inner or outer portions of the permanent magnets in the rotor core.

## Description

The present invention relates to a permanent magnet electric motor comprising a rotor, carrying permanent magnets, within a stator.

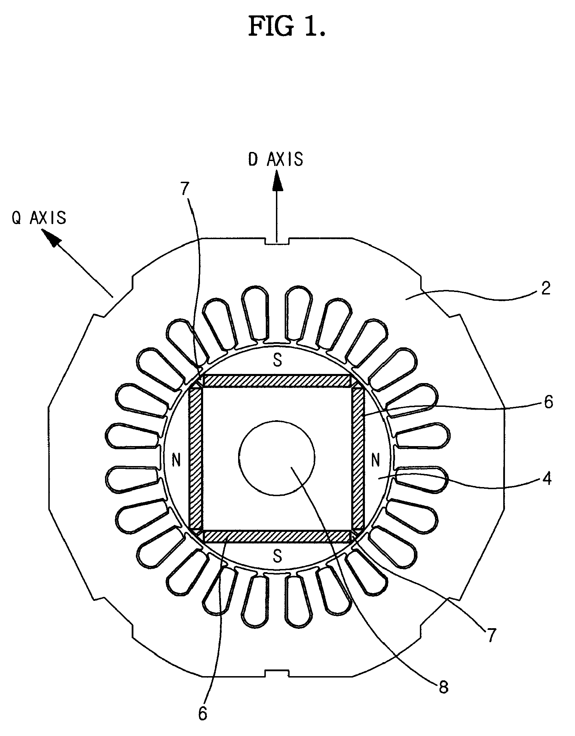

Generally, an electric motor, such as a brushless DC motor, is configured such that permanent magnets are disposed in a rotor core, and one example of the electric motor is illustrated in Figure 1.

Figure 1 is a plan view of the inside of the permanent magnet electric motor, shown at a plane orthogonal to the rotary axis thereof. The permanent magnet electric motor is a three-phase, four-pole electric motor.

In Figure 1, a rotor core 4 is disposed in a stator core 2 for generating a rotating magnetic field, and permanent magnets 6 and the poles of the electric motor (for example, four poles) are equinumerant and are disposed in a circumferential direction along the outer diameter of the rotor core 4.

Each of the permanent magnets 6 is band-shaped and has a rectangular cross-section.

Triangular-section holes 7, at the ends of the permanent magnets, serve as flux barriers for preventing short circuits and leakage of the magnetic flux between neighbouring permanent magnets 6.

A central hole 8 for the motor's shaft is formed through the centre of the rotor core 4.

With this structure, a ratio of the inductance of the d axis to the inductance of the q axis (i.e. salient pole longitudinal current) is obtained, and reluctance torque is generated due to a difference of inductances between the d axis and the q axis.

The reluctance torque has an electrical phase difference of 90° with respect to the magnet torque generated by the permanent magnets 6 and is varies over a two-times longer cycle than the magnet torque. When the positions of the permanent magnets 6 are closer to the inner circumference of the rotor core 4, or the reluctance torque is more effectively used, the length of the rotor core 4, serving as a magnetic member disposed between the permanent magnets 6 and the surface of a rotor, in a radial direction is increased, thereby facilitating dispersion of the magnetic flux and smoothing the distribution of the permanent magnets 6 on the surface of the rotor core 4.

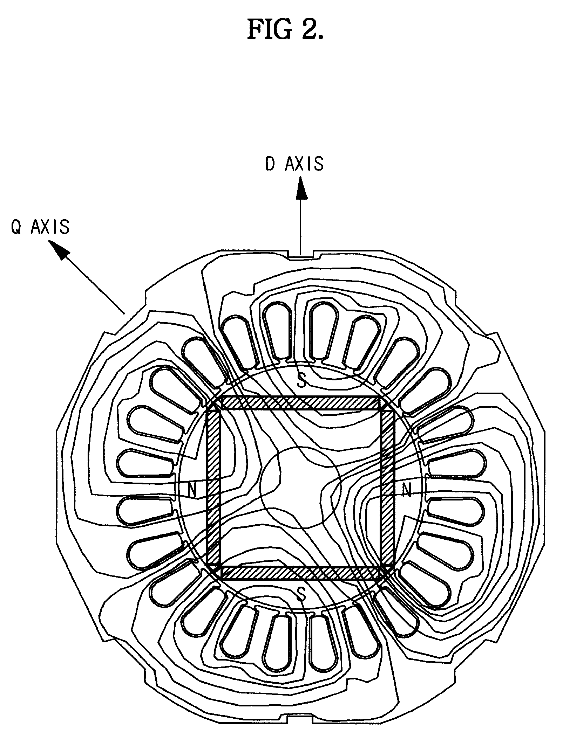

Figure 2 illustrates distribution of the magnetic flux of the above conventional permanent magnet electric motor, representing the magnetic flux starting from the permanent magnets 6 and the flow of the magnetic flux generating the reluctance torque.

In Figure 2, Φₘ represents the magnetic flux when external excitation is performed to obtain the magnet torque, and Φᵣ represents the magnetic flux when external excitation is performed to obtain the reluctance torque. Here, the centre of the field poles is the centre of the magnet torque and generally used as the d axis, and the position between the field poles has an electrical phase difference of 90° with the d axis and is generally used as the q axis.

As described above, since the permanent magnets, having a low permeability, of the conventional permanent magnet electric motor are approximately orthogonally disposed along a magnetic path of the d axis, the inductance of the d axis is low. On the other hand, since the permanent magnets, having a comparatively high permeability, of the conventional permanent magnet electric motor are disposed along a magnetic route of the q axis, the inductance of the q axis is higher than but nearly identical to the inductance of the d axis.

Accordingly, the ratio of the inductance of the d axis to the inductance of the q axis is extremely small, and the magnet torque contributes to the motor torque while the reluctance torque does not nearly contribute to the motor torque.

Further, as shown in Figure 2, which illustrates the lines of the magnetic flux when the pole centre of the stator core 2 coincides with the pole centre of the rotor core 4, the magnetic flux in the rotor core 4 is not uniformly divided with respect to the pole centre of the core 4 of the rotor, but is spread, thereby being leaked. Thereby, the amount of ripple of the motor torque is increased, thereby highly influencing the noise of the electric motor.

A motor, according to the present invention, is characterised by the rotor having low permeability regions for guiding the magnetic flux produced by the permanent magnets.

The low permeability regions may be air-filled regions.

The magnets are preferably embedded in the rotor in a configuration having a polygonal, preferably square, cross-section. Each magnet may be in the form of a strip extending parallel to the rotor's axis of rotation.

Preferably, there are low permeability regions following arcuate paths around the corners of the polygon defined by the cross-section of the permanent magnets. Each arcuate path is preferably followed, in order, by a first outer portion, first and second discrete inner portions and a second outer portion, the outer portions being outside the polygon, defined by the cross-section of the permanent magnets, and the inner portions being inside said polygon.

There may also be a radially extending, low permeability region midway along and outside each side the polygon defined by the cross-section of the permanent magnets.

Additional preferred and optional features are set forth in claims 7 to 17 appended hereto.

An embodiment of the present invention will now be described, by way of example, with reference to Figures 3 to 5 of the accompanying drawings in which:
Figure 1 is a schematic plan view of a conventional permanent magnet electric motor;
Figure 2 is a schematic view illustrating the magnetic flux distribution of the conventional permanent magnet electric motor;
Figure 3 is a schematic plan view of a permanent magnet electric motor in accordance with the present invention;
Figure 4 is a schematic view illustrating distribution of the magnetic flux of the permanent magnet electric motor of the present invention; and
Figure 5 is a graph illustrating wave forms of torques of the conventional permanent magnet electric motor and the permanent magnet electric motor of the present invention.

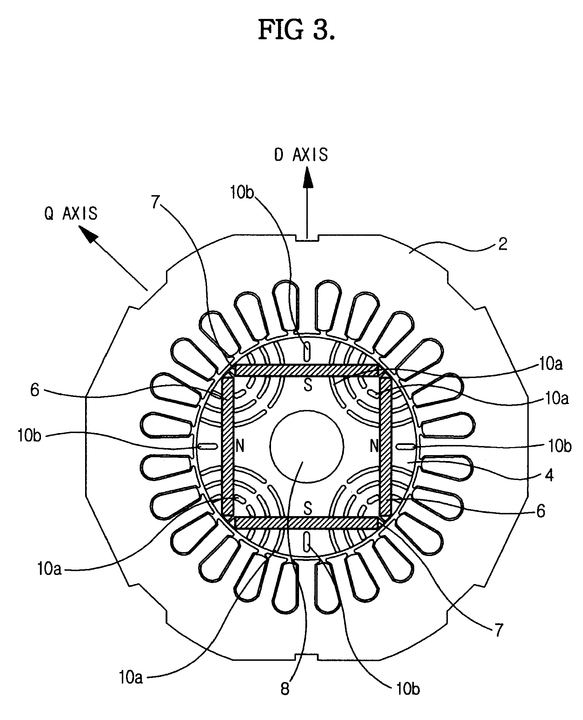

Referring to Figure 3, a rotor core 4 is disposed in a stator core 2 for generating a rotating magnetic field, and permanent magnets 6, equal in the number to the number of poles of the electric motor (for example, four poles), are disposed in a circumferential direction around the circumference of the rotor core 4.

Each of the permanent magnets 6 is band-shaped, has a rectangular cross-section, and is disposed horizontally with the length of a magnetic flux (a magnetic flux from the stator core) from one end of the corresponding permanent magnet 6 along the q axis to the other end of the corresponding permanent magnet 6 along the q axis and vertically to the length of a magnetic flux (a magnetic flux from the stator core) from one end of the corresponding permanent magnet 6 along the d axis to the other end of the corresponding permanent magnet 6 along the d axis.

A pair of N-pole permanent magnets 6 and a pair of S-pole permanent magnets 6, which are opposite to each other, are disposed around the rotor core 4. The permanent magnets 6 are buried in the rotor core 4 in radial directions.

Holes 7, serving as flux barriers, for preventing short circuits and leakage of the magnetic flux between the neighbouring permanent magnets 6 are formed through both ends of the magnets 6, and have triangular cross-sections.

A central hole 8 for the motor's shaft is formed through the centre of the rotor core 4, and the rotor core 4 is made of an electrical steel sheet, having a relative magnetic permeability (µ_{R}) of approximately 3,000~4,000.

The permanent magnet electric motor of the present invention is configured such that a plurality of slits 10a, 10b (for example, two to four slits) are disposed in an arc shape inside the rotor core 4. The insides of the slits 10a, 10b are filled with air having a relative magnetic permeability (µ_{R}) of 1.

The plural slits 10a, 10b are stacked in plural lines having different lengths in the axial direction of the rotor core 4, and have the same thickness.

The plural slits 10a having an arc shape are disposed such that the central points of the arc-shaped slits 10a are not disposed at the inside of the rotor core 4 but are disposed at areas, which are between the surface and the inside of the rotor core 4 and located between the permanent magnets 6 on the central line of the rotor core 4, i.e., at areas at 45° from the pole centres of the permanent magnets 6.

The rectilinear-shaped slits 10b are disposed between groups of arc-shaped slits 10a and the groups of arc-shaped slits 10a, the central points of which differ from each other, are disposed on the rotor core 4 outside the permanent magnets 6.

Here, magnetic flux is formed between the N poles and the S poles due to the permanent magnets 6 inside the rotor core 4. In order to allow the magnetic flux and a magnetic flux generated by the windings of the stator core 2 to flow in the same direction, the rotor core 4 is rotated.

In the present invention, the route of the magnetic flux generated by the permanent magnets 6 of the rotor core 4 is determined by the shape of the rotor core 4, and the determined route of the magnetic flux is defined by the shapes of the slits 10a, 10b formed in the rotor core 4.

The insides of the slits 10a, 10b are filled with air having a relative magnetic permeability (µ_{R}) of 1, and the rotor core 4 is made of an electrical steel sheet having a relative magnetic permeability (µ_{R}) of approximately 3,000~4,000. Furthermore, the magnetic flux is characterized in that the magnetic flux flows through a region having a low reluctance (R=1/µ_{R}). Thereby, the direction of the flow of the magnetic flux is determined by the magnetic flux generated by the windings of the stator core 2 and the magnetic poles of the rotor core 4.

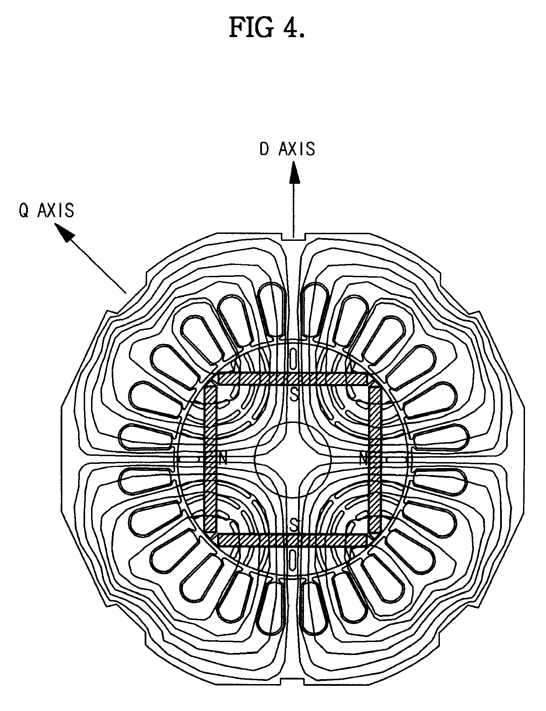

As described above, the magnetic flux in the rotor core 4 flows between the slits 10a, 10b. That is, as shown in Figure 4, the directions of the slits 10a, 10b set the direction of the flow of the magnetic flux and determine the flow of the magnetic flux, so that the magnetic flux is not concentrated on one portion of the inside of the rotor core 4 but is uniformly distributed throughout the inside of the rotor core 4, thereby reducing a loss of the rotor core 4.

Accordingly, since the magnetic flux of the rotor core 4 uniformly passes through the overall surface of the rotor, magnetic torque is not concentrated onto one side, but has a sinusoidal value. Since the magnetic torque has a sinusoidal wave form highly influencing the wave form of the torque, motor torque has a nearly sinusoidal wave form, thereby reducing noise generated due to vibration of the electric motor.

Particularly, an axis, from which the reluctance torque is generated, and an axis, from which the magnetic torque is generated, do not meet at an angle of 90°, but coincide with each other (i.e., the d axis and the q axis coincide with each other).

Accordingly, when the pole center of the stator core 2 and the pole center of the rotor core 4 coincide with each other, the motor torque is maximized. Here, since the motor torque has a wave form, which is not distorted but is nearly close to the sinusoidal wave form, the electric motor is efficiently driven, and it is possible to reduce the noise of the electric motor.

The slits 10a of the rotor core 4 have arc shapes, and are disposed such that the central points of the arc-shaped slits 10a are not disposed at the inside of the rotor core 4 but are disposed at areas, which are deviated from the surface or the inside of the rotor core 4 and located between the permanent magnets 6 on the central line of the rotor core 4, i.e., at areas at 45° from the pole center of the permanent magnets 6.

Accordingly, when the magnetic flux flows from the N pole to the S pole, the structures of the slits 10a in the rotor core 4 assist the efficient flow of the magnetic flux, and induce the magnetic flux to a route having a short distance, thereby reducing a loss of the rotor core 4 and improving the efficiency of the electric motor. Further, since the magnetic flux on the surface of the rotor core 4 has a sinusoidal wave form, the torque has a sinusoidal wave form, thus reducing noise generated due to vibration of the electric motor.

Torque of a BLDC motor is generated by the reluctance torque and the magnet torque. In order to reduce the noise of the electric motor, riffle of the torque must be decreased.

Accordingly, in order to decrease of the riffle of the torque of the electric motor of the present invention, a high-frequency component of the torque is decreased by maximally decreasing a reluctance torque component. Thereby, the torque has a nearly sinusoidal wave form, thus reducing the noise of the electric motor.

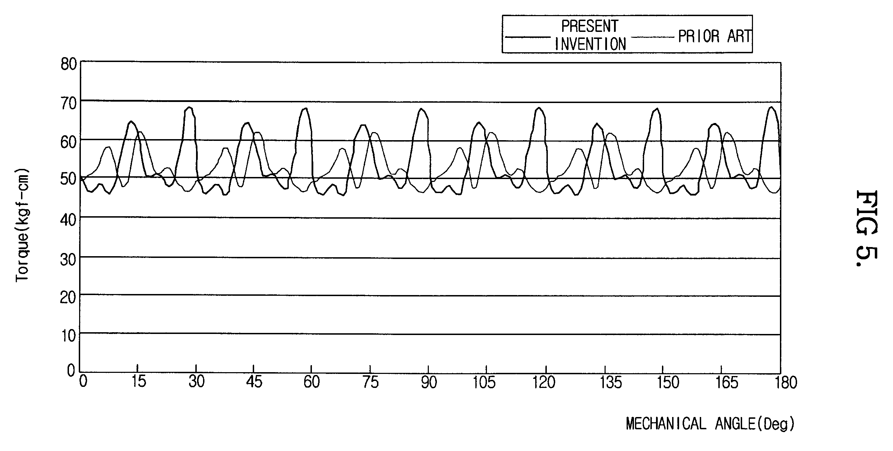

As shown in Figure 5, the permanent magnet electric motor of the present invention has a motor torque (kgf-cm) of 5.393N similar to the motor torque of 5.229N of the conventional permanent magnet electric motor, but has an improved torque riffle of 30.6% while the conventional permanent magnet electric motor has a motor riffle of 42%. Accordingly, the noise generated due to the vibration of the electric motor of the present invention is efficiently reduced.

As apparent from the above description, the present invention provides a permanent magnet electric motor, in which arc-shaped slits are stacked in plural lines inside a rotor core so as to maximally decrease a reluctance torque component, thereby reducing a high-frequency component of torque and allowing the torque to have a nearly sinusoidal wave form, thus decreasing an amount of riffle of motor torque and reducing noise.

## Claims

1. A permanent magnet electric motor comprising a rotor (4), carrying permanent magnets (6), within a stator (2), **characterised by** the rotor (4) having low permeability regions (10a, 10b) for guiding the magnetic flux produced by the permanent magnets (6).

2. A motor according to claim 1, wherein the low permeability regions (10a, 10b) are air-filled regions.

3. A motor according to claim 1 or 2, wherein the magnets (6) are embedded in the rotor (4) in a configuration having a polygonal, preferably square, cross-section.

4. A motor according to claim 3, wherein there are low permeability regions (10a) following arcuate paths around the corners of the polygon defined by the cross-section of the permanent magnets (6).

5. A motor according to claim 4, wherein each arcuate path is followed, in order, by a first outer portion, first and second discrete inner portions and a second outer portion, the outer portions being outside the polygon, defined by the cross-section of the permanent magnets (6), and the inner portions being inside said polygon.

6. A motor according to claim 4 or 5, wherein there is a radially extending, low permeability region (10b) midway along and outside each side the polygon defined by the cross-section of the permanent magnets (6).

7. A permanent magnet electric motor, in which permanent magnets are disposed in a rotor core,
wherein slits are disposed along a route of a magnetic flux inside the rotor core.

8. The permanent magnet electric motor as set forth in claim 7,
wherein the slits are stacked in plural lines at inside or outside portions of the permanent magnets between the permanent magnets.

9. The permanent magnet electric motor as set forth in claim 8,
wherein the number of the plural lines of the slits is at least two.

10. The permanent magnet electric motor as set forth in claim 8,
wherein the plural slits are disposed in arc shapes.

11. The permanent magnet electric motor as set forth in claim 10,
wherein the central points of the arc-shaped slits are located on the surface of the rotor core.

12. The permanent magnet electric motor as set forth in claim 10,
wherein the central points of the arc-shaped slits are located on the outer circumferential surface of the rotor core deviated from the inside of the rotor core.

13. The permanent magnet electric motor as set forth in claim 12,
wherein the central points of the arc-shaped slits are located on the central line of the rotor core between the permanent magnets.

14. The permanent magnet electric motor as set forth in claim 13,
wherein rectilinear-shaped slits are disposed between the arc-shaped slits having different central points.

15. The permanent magnet electric motor as set forth in claim 14,
wherein the rectilinear-shaped slits are located at the outer portions of the permanent magnets.

16. A permanent magnet electric motor, in which permanent magnets are disposed in a rotor core,
wherein slits for inducing the formation of a route of a magnetic flux are disposed inside the rotor core.

17. The permanent magnet electric motor as set forth in claim 16
wherein the route of the magnetic flux is uniformly distributed with respect to the permanent magnets.
